Europäisches Patentamt

European Patent Office

Office européen des brevets

Publication number: **0 275 655**

**A1**

# EUROPEAN PATENT APPLICATION

Application number: **87310897.1**

Date of filing: **10.12.87**

Int. Cl.4 **F16C 3/02** , F16D 3 06 ,
F16D 3/21

Priority: **17.12.86 GB 8630091**

Date of publication of application:
**27.07.88 Bulletin 88/30**

Designated Contracting States:
**DE ES FR**

Applicant: **HARDY SPICER LIMITED**
**Chester Road**
**Erdington Birmingham B24 ORB(GB)**

Inventor: **Bird, Colin Arthur**
**64 The Boulevard**
**Sutton Coldfield West Midlands B73 5JG(GB)**
Inventor: **Ledbetter, Robert Stanley**
**230 Kendrick Avenue**
**Birmingham B34 7SN(GB)**

Representative: **Dodd, Graham Marshall et al**
**Guest Keen and Nettlefolds plc Group**
**Patents and Licensing Department P.O. Box**
**55 Ipsley House Ipsley Church Lane**
**Redditch Worcestershire B98 0TL(GB)**

## Drive shaft.

A drive shaft includes a plunging joint, e.g. a plunging constant velocity ratio universal joint (10), and a detent coupling which provides sufficient additional length adjustment in the shaft for assembly purposes and to allow for manufacturing tolerances without requiring another plunging joint to be provided. The detent coupling may comprise a splined connection between the inner member (14) of the joint (10) and a stub shaft (24) therein, the inner member or shaft having circumferential grooves and the shaft or inner member, respectively, having a detent member (27) engagable therewith.

EP 0 275 655 A1

Fig. 2

Fig.1

# DRIVE SHAFT

This invention relates to a drive shaft including a plunging torque transmitting joint (i.e. a joint capable of transmitting torque while accommodating relative axial movement between the parts it is connecting). The invention has been made in relation to drive shafts for use in motor vehicles, particularly vehicle propeller shafts, but it will be appreciated that shafts according to the invention are applicable generally where similar or analogous requirements, as described hereafter, arise.

The propeller shaft of a motor vehicle, i.e. the shaft extending longitudinally of the vehicle between parts of the power train such as an engine gearbox unit and an axle differential unit, typically comprises a shaft assembly having a universal joint at each end. Commonly such universal joints are Hookes joints, or, for some installations, constant velocity ratio universal joints. If the joints are Hookes joints, the shaft usually has to incorporate a plunging joint in the form of a sliding spline assembly to accommodate changes in the overall length of the shaft in use, as a result of geometrical changes arising from working of the vehicle's suspension. In the case of a shaft having constant velocity ratio universal joints, the change in length may be accommodated by having at least one plunging constant velocity ratio joint, eliminating the need for any separate plunging joint.

The total plunging capacity required to be provided in a drive shaft such as a vehicle propeller shaft is greater than that necessary merely as a result of geometrical changes with vehicle suspension movement. There has to be sufficient shaft length adjustment to enable the shaft to be assembled into and dismantled from the vehicle both for initial build and servicing purposes, and allowance has also to be made for vehicle and shaft manufacturing tolerances. In the case of a shaft which has a constant velocity ratio universal joint at each end, this may require both such joints to be of plunging type since the plunging range of one joint alone may not be adequate. A shaft having two plunging constant velocity ratio joints brings a further problem in that in use one of the joints is likely to run at the extreme end of its plunging range, which is undesirable. Additionally, the use of two plunging constant velocity ratio joints is expensive. If the plunging joint in the shaft is a sliding spline assembly, the cost thereof is increased by having to provide a plunge capacity therein greater than that actually necessary in service. Some vehicles have propeller shafts incorporating more than two universal joints, in which case a support bearing is provided at or adjacent the or each centre joint. The shaft parts on each side of a support bearing then have to include plunging joints for the reasons above described, further increasing the cost and potential operational problems of the entire shaft assembly.

It is the object of the present invention to overcome or reduce these problems.

According to the invention, we provide a drive shaft including a plunging torque transmitting joint; further including a detent coupling comprising two parts connected for torque transmission and movable axially relative to one another and detent means operable to hold said two parts in one of a number of relative axial positions, said detent means permitting axial movement between said parts under an axial force greater than that required to cause plunging of said joint.

In a drive shaft according to the invention, the detent coupling provides the shaft length adjustment necessary for assembly purposes and to accommodate production tolerances, while the plunging joint has to accommodate only shaft length changes which occur under dynamic conditions in use. Thus the amount of plunging movement required of the plunging joint can be relatively reduced compared with that generally required hitherto. Design of the plunging joint can be optimised.

Where the plunging joint is a plunging constant velocity ratio universal joint the provision of the detent coupling may mean that the plunge capacity of such joint is sufficient in itself, without the necessity for providing another plunging constant velocity ratio joint. Thus, in a shaft having a universal joint at each end, the universal joint at the opposite end to the plunging constant velocity ratio joint need not provide any plunging ability. For example, a constant velocity ratio joint of the so-called "fixed" type may be used. In addition to avoiding the expense of providing two plunging constant velocity ratio joints, the problem above referred to of the shaft running at the end of the plunging range of a joint, is avoided. Further, a fixed joint is capable of running at a greater angle of articulation than a plunging constant velocity ratio universal joint, and the dynamic stability of the shaft in use is improved since a fixed joint provides better control of the radial position of the parts it connects than does a plunging joint.

When a shaft according to the invention is installed in a vehicle, the detent coupling will provide sufficient length adjustment for assembly and to accommodate tolerances as above described. In use, when geometrical changes cause the plunging joint to reach one or other of its limits of plunging movement, axial movement will be caused in the detent coupling by the application thereto, in the direction either of compression or expansion, of an increased axial force. Axial movement in the detent coupling occurs to a position in which all normal length changes in the drive shaft occur in the normal plunging range of the plunging joint. In effect, the detent coupling is self-setting in use to compensate for the tolerances in the construction of the vehicle.

The detent coupling conveniently comprises a shaft element and a sleeve therearound, which have interengaging torque transmitting formations such as splines, one of the shaft element and sleeve having a number of axially spaced circumferentially extending formations such as grooves with which a detent member on or associated with the other of said shaft element and sleeve engages. Examples of embodiments of such a detent coupling are described in detail hereafter.

The sleeve element may be the inner member of a constant velocity ratio universal joint, either of fixed or plunging type, and this gives rise to two further advantageous possibilities. Firstly, the articulation centre of the constant velocity universal joint may be within the detent coupling, so that the detent coupling is not subject to bending loads. Secondly, the detent coupling may be protected from ingress of dirt by a sealing boot provided for the constant velocity ratio universal joint.

In a propeller shaft assembly having a centre universal joint and support bearing, a respective detent coupling may be incorporated in the shaft part at each side thereof. A detent coupling may be incorporated as part of the support bearing assembly, as part of the associated universal joint, or indeed as part of any coupling or other element in a shaft part.

These and other features of the invention will now be described by way of example with reference to the accompanying drawings, of which:-

Figure 1 is an elevation, partly in section, of a drive shaft according to the invention;

Figure 2 is an enlarged section through a part of the plunging constant velocity ratio universal joint of the shaft of Figure 1;

Figure 3 is a section through a modification of the plunging constant velocity ratio universal joint and detent coupling of Figures 1 and 2;

Figure 4 is a section showing part of a further form of joint and detent coupling; and

Figure 5 is a section showing part of yet another form of joint and detent coupling.

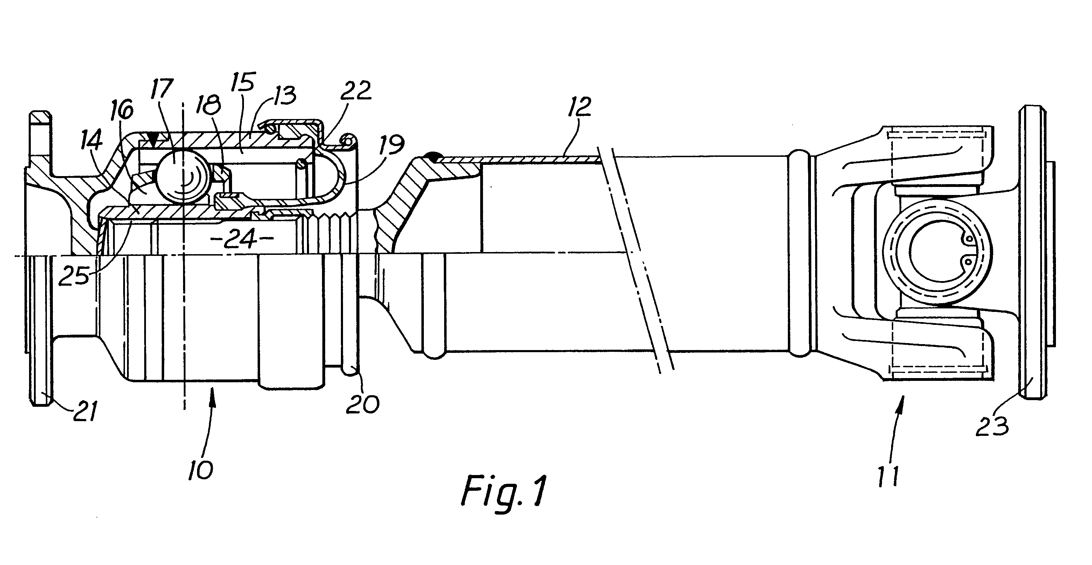

Referring firstly to Figure 1 of the drawings, there is shown a drive shaft which comprises, broadly, a plunging constant velocity ratio universal joint 10, a Hookes universal joint 11, and a tubular shaft element 12 extending therebetween. The constant velocity ratio joint 10 comprises an outer member 13 and an inner member 14, of which the former is in the general form of a hollow cylinder having a plurality of circumferentially spaced straight axially extending grooves 15 in its interior, facing the same number of grooves 16 provided in the inner joint member. A plurality of torque transmitting balls 17 are disposed one in each facing pair of grooves in the joint members, and the balls are retained within an annular cage 18 having axially offset internal and external part-spherical surfaces engaging, respectively, the external surface of the inner joint member and the internal surface of the outer joint member between the grooves thereof. This joint, which is of generally known type, provides for plunge, i.e. relative axial movement between the inner and outer joint members, by rolling of the balls along the grooves therein, as well as relative articulation between the joint members. The joint is sealed by a flexible sealing boot 19 connected between the inner and outer joint members. The boot is held on the outer joint member by a metal sleeve 20.

Inner joint member 14 is connected to a stub shaft 24 welded to the tubular shaft element 12. Outer joint member 13 is welded to a drive flange element 21 for bolting to a flange on another drive line part. One of the axial limits of relative plunging movement between the inner and outer joint members of the joint 10 is determined by a spring ring 22 adjacent the end of the outer joint member 13 to which the boot is fitted, with which spring ring the cage 18 engages at maximum permissible extension of the joint. In the opposite direction, the inner joint member is engageable with the element 21 to determine the limit of joint plunging movement.

The Hookes joint 11 is of known type and will not therefore be described in detail. It provides for connection to a further drive flange 23.

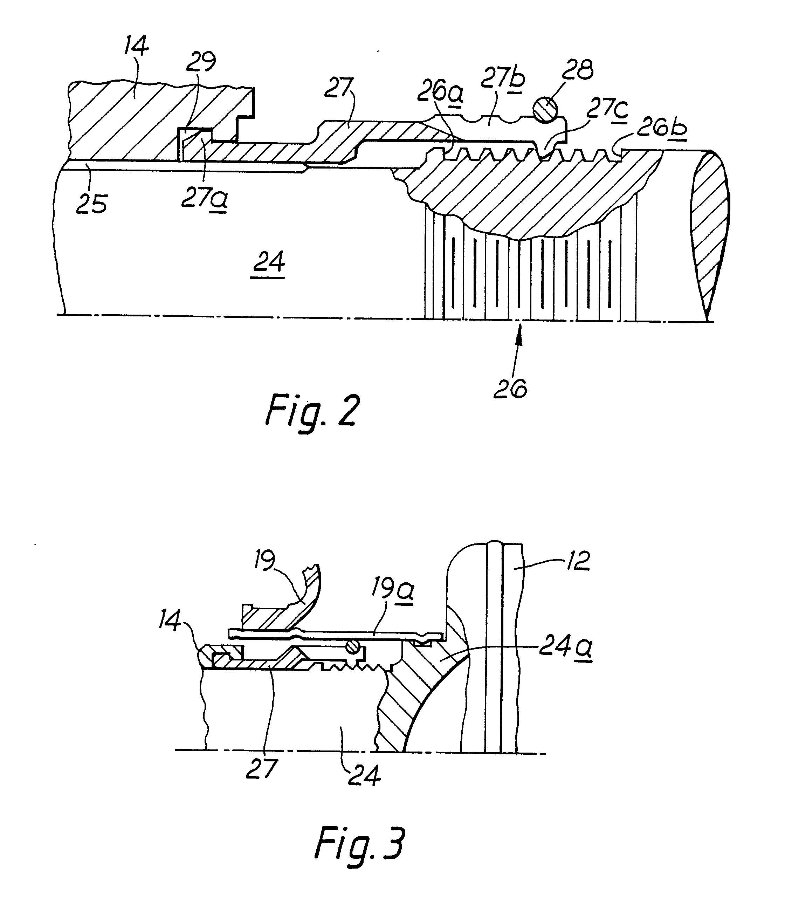

The inner joint member 14 is in the form of a sleeve received on the stub shaft 24 which is welded to the tubular shaft element 12. Inter-engaging splines 25 provide for torque transmission between the stub shaft and inner joint member, and the relative axial position of the stub shaft and inner joint member is determined by a detent coupling which will now be described with reference to Figure 2 of the drawings.

In Figure 2, there is seen in partial section part of the inner joint member 14 and the stub shaft 24, and the splined torque transmitting connection 25 therebetween. An adjacent portion of the stub shaft 24 is provided with axially spaced circumferentially extending grooves 26 in its surface, which grooves are generally of V-section.

An annular collar element 27 is connected to the inner joint member 14 by way of a radially outwardly extending annular projection 27a on the collar element, engaging in an undercut annular groove 29 in the inner joint member. The opposite end of the collar element 27 has axially extending slots therein to divide it into a plurality of axially extending circumferentially spaced fingers 27b each of which has, adjacent its free end, a radially inwardly extending detent formation 27c. It will be apparent, therefore, that the engagement of the detent formations 27c on fingers 27b in a particular one of the grooves 26 will fix the relative axial position of the stub shaft 24 and inner joint member 14 until a sufficient axial force is exerted therebetween to cause the detent formations 27c to be cammed out of engagement with the groove against the resilience of fingers 27b. Such camming occurs by virtue of the generally V-shaped cross-section of the grooves 26. Detent formations 27c will re-enter another groove to prevent further relative axial movement between the stub shaft and inner joint member after the force has ceased to be applied.

The collar element 27 may be moulded of a plastics material, and to ensure that the fingers 27b apply sufficient radially inwardly directed force, a spring ring 28 may be disposed around the fingers.

End ones of the grooves 26 have end walls 26a, 26b respectively which are substantially perpendicular to the rotary axis of the stub shaft 24. These define the limits of movement of the detent coupling.

It will further be noted that the detent formations 27c have their parts which engage with the opposite sides of the grooves 26 inclined at different angles to the axis of the stub shaft. This ensures that substantially equal axial forces are required to be applied to cause relative movement in the directions of extension or contraction of the detent coupling.

In the drive shaft above described, the maximum amount of change in length provided is the sum of that provided by the plunging constant velocity ratio universal joint 10 and by the detent coupling between the inner member 14 of the joint and the stub shaft 24. In practice, the range of shaft length adjustment provided by the detent coupling provides for assembly and to cater for manufacturing tolerances. Once installed, the detent coupling will, in effect, set itself to a position at which dynamic geometrical changes in shaft length, e.g. due to vehicle suspension movement, occur within the plunging range of the constant velocity ratio universal joint. After assembly, axial movement in the detent coupling will occur when the plunging universal joint reaches one or other of its limits of plunging movement, whereafter a force is applied between the inner joint member 14 and stub shaft 24 causing axial movement therebetween, of one or more grooves 26, as above described.

Figure 3 of the drawings shows a possible modification of the joint shown in Figures 1 and 2. In Figures 1 and 2, the boot 19 is secured to the inner joint member 14. In the modification of Figure 3, boot 19 is connected to a sleeve 19a which is secured to a larger diameter extension 24a of stub shaft 24 adjacent its welded connection to the tubular shaft element 12. The detent coupling comprising the collar element 27 and associated parts is thus within the enclosure sealed by the boot 19 and thereby protected from ingress of road dirt or other contaminants.

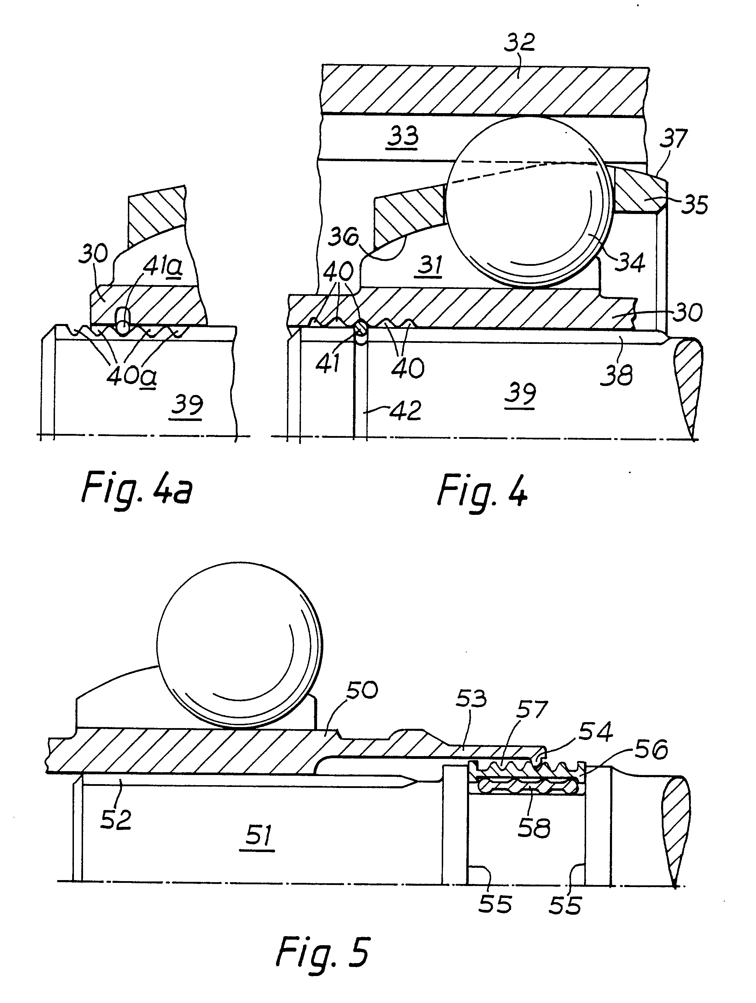

Referring now to Figure 4 of the drawings, there is shown part of a plunging type of constant velocity ratio universal joint, having a further embodiment of detent coupling according to the invention. The joint has an inner joint member 30 one of whose circumferentially spaced axially extending grooves is indicated at 31. The outer joint member is indicated at 32, and the groove therein at 33 facing the groove 31. Ball 34 is received in the facing grooves 31, 33 and the annular cage which retains all the balls in the joint with their centres in a common plane is indicated at 35. The well-known axially offset arrangement of internal and external part-spherical cage surfaces 36, 37, engaging an external part-spherical surface of the inner joint member 30 and an internal cylindrical surface of the outer joint member 32 between the grooves therein is clearly seen.

The inner joint member 30 is in the form of a sleeve, having a torque transmitting connection by way of splines 38 with a shaft element 39 therein. Adjacent one end, the inner joint member 30 has a plurality of axially spaced circumferentially extending grooves 40 therein which are of generally V-shape in the cross-section illustrated. The shaft element 39 has a spring ring 41 captive in an annular groove 42 therein, and the spring ring 41 engages one of the grooves 40. The configuration of the grooves 40 is such that when sufficient axial force is applied between the inner joint member 30 and shaft element 39, ring 41 is cammed radially inwardly until it rides over the crest between adjacent grooves 40 to enter the next groove.

In analogous manner to that above described in relation to Figures 1 and 2, the strength of the spring ring 41 and the configuration of grooves 40 is selected to be such that the axial force required to cause relative axial movement between the inner joint member 30 and shaft element 39 is greater than that required to cause plunging movement in the constant velocity ratio universal joint in use. Therefore, once the detent coupling constituted by ring 41 and grooves 40 has been set for a particular installation with the ring 41 in an appropriate groove 40, further length changes in the shaft in use will be accommodated by plunging of the universal joint. Upon initial installation. however. when the plunging universal joint reaches one or other of its limits of plunging movement sufficient force will be exerted on the detent coupling to cause it to permit axial axial movement between the shaft and inner joint member.

It will be noted that the end ones of the grooves 40 have more steeply inclined sides than the intermediate grooves 40. This means that a greater force would be required to move the detent coupling beyond its intended limits that is required to move it within such limits.

Figure 4a shows a detailed modification of the embodiment of Figure 4, wherein the inner joint member 30 carries a captive spring ring 41a. spring biased radially inwardly to engage grooves 40a provided in shaft member 39. Otherwise the manner of operation thereof is as for Figure 4.

Referring now to Figure 5 of the drawings. there is shown an inner joint member 50 connected to a stub shaft 51 by splines 52. The inner joint member 50 has an axial extension 53 terminating in an annular, radially inwardly extending, detent formation 54. The stub shaft 51 has two shoulders 55 between which is disposed a split annulus 56 of relatively wear resistant plastics material, having a plurality of circumferentially extending axially spaced grooves 57. The split annulus 56 is expanded radially outwardly by an element 58, e.g. of an elastomeric material, interposed between it and the stub shaft.

The detent coupling constituted by the extension 53 and its formation 54 of the inner joint member. and the element 56 carried by the stub shaft 51. operates in analogous manner to the detent couplings above described. the element 56 being contracted radially by the camming action thereon of formation 54 when excess axial force is applied between the inner joint member 50 and stub shaft 51. As for the embodiments above described, the end ones of the grooves 57 have walls substantially perpendicular the axis of the stub shaft, to define the limits of movement of the detent coupling in use.

In the examples above described, the detent coupling is incorporated in a plunging constant velocity ratio universal joint. However, it would be within the scope of the invention for the detent coupling to be provided in association with the Hookes joint at the opposite end of the shaft. Alternatively the detent coupling could be provided at any part of the shaft, not necessarily in association with either universal joint. The nature of the constant velocity ratio joint is, however. such that it is convenient to incorporate the detent coupling therein. If a fixed constant velocity ratio universal joint were provided instead of the Hookes joint, the detent coupling could be provided at such joint. In any event. the necessity and potential problems of providing two plunging universal joints are avoided.

## Claims

1. A drive shaft including a plunging torque transmitting joint (10); characterised by including a detent coupling comprising two parts (14. 24; 30, 39; 50, 51) connected for torque transmission and movable axially relative to one another and detent means (26, 27; 40. 41; 40a, 41a; 53, 56) operable to hold said two parts in one of a number of relative axial positions. said detent means permitting axial movement between said parts under an axial force greater than that required to cause plunging of said joint (10) in use.

2. A drive shaft according to Claim 1 further characterised in that said plunging joint (10) is a plunging constant velocity ratio universal joint.

3. A drive shaft according to Claim 1 or Claim 2 further characterised in that said plunging joint (10) is disposed at one end of the drive shaft and a universal joint (11) is disposed at the opposite end thereof.

4. A drive shaft according to Claim 2 or Claim 3 further characterised in that the articulation centre of the or one of said universal joints lies generally within the detent coupling.

5. A drive shaft according to any one of the preceding claims further characterised in that said detent coupling comprises a shaft element (24: 39: 51) and a sleeve (14: 30: 50) therearound. said shaft element and sleeve having interengaging torque transmitting formations such as splines (25: 38; 52). one of said shaft element and sleeve having a number of axially spaced circumferentially extending formations (26: 40; 40a: 57) with which a detent member (27: 41; 41a: 53) on or associated with the other of said shaft elements and sleeve engages.

6. A drive shaft according to Claim 5 further characterised in that said circumferentially extending formations comprise annular grooves (40) in the interior of said sleeve, and said detent member comprises a spring ring (41) carried by said shaft element.

7. A drive shaft according to Claim 5 further characterised in that said circumferenti.'ly extending formations comprise annular grooves (26: 40a) provided on said shaft element. and said detent member comprises an exterior resilient element (27; 41a) connected to said sleeve.

8. A drive shaft according to Claim 7 further characterised in that said resilient element comprises a collar element (27) having a plurality of circumferentially spaced axially extending fingers (27b) with detent formations (27a) engaging said grooves (26).

9. A drive shaft according to Claim 8 further characterised in that said collar element (27) is of a plastics material.

10. A drive shaft according to Claim 7 further characterised in that said resilient element comprises a spring ring (41a) carried by said sleeve.

11. A drive shaft according to Claim 5 further characterised in that said formations (57) comprise annular grooves provided on a member (56) held between abutments (55) on said shaft (51) and spring biassed radially outwardly into engagement with a detent member (53) provided on said sleeve (50).

12. A drive shaft according to any one of the preceding claims further characterised in that the axial force required to cause axial movement in said detent coupling is substantially the same in both directions.

13. A drive shaft according to Claim 5 or any one of Claims 6 to 12 appendent thereto further characterised in that said sleeve element (14; 30; 50) is the inner member of a constant velocity ratio universal joint.

14. A drive shaft according to Claim 13 further characterised in that the detent coupling is protected from ingress of dirt by a boot (19) which also seals the constant velocity ratio universal joint.

15. A plunging constant velocity ratio universal joint including an inner joint member (14; 30; 50) in the form of a sleeve and a shaft (24; 39; 51) fitting therein, the shaft and inner joint member having interengaging torque transmitting formations (25; 38; 52) which permit relative axial movement therebetween, characterised by detent means (26, 27; 40, 41; 40a, 41a; 53, 56) operable to hold the shaft and inner joint member in one of a number of relative axial positions but permitting said relative axial movement under an axial force greater than that required to cause plunging of the universal joint in use.

*Fig.1*

0 275 655

14 29 27 26a 27b 28 27c 26b

25 27a

24

26

Fig. 2

19 19a

14 12

24a

27 24

Fig. 3

Fig. 4a

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 549 782 (PORSCHE) * Page 1, lines 6-8; page 2, line 3; page 4, lines 24-30; page 5, lines 31-35; page 6, lines 8-17; figures * | 1,2,3,4 ,5,6,12 ,13,14, 15 | F 16 C 3/02 <br> F 16 D 3/06 <br> F 16 D 3/21 |
| A | ----- | 8,9 | |

TECHNICAL FIELDS SEARCHED (Int. Cl.4)

F 16 C
F 16 D

The present search report has been drawn up for all claims

| Place of search | Date of completion of the search | Examiner |
|---|---|---|
| THE HAGUE | 25-03-1988 | ORTHLIEB CH.E. |